# EUROPEAN PATENT APPLICATION

(11) **EP 1 143 274 A2**
(43) Date of publication of application: **10.10.2001**
(21) Application number: 01107067.9
(22) Date of filing: 21.03.2001
(51) Int. Cl.: G02B 6/36

(54) **Multi-channel on-axis fiber optic rotary joint**

(30) Priority: 21.03.2000 US 531772
(71) Applicant: LITTON SYSTEMS, INC., Woodland Hills, California 91367-6675 (US)
(72) Inventor: Bowman, Anthony, Pembroke, Virginia 24136 (US); Wright, James M., Riner, Virginia 24149 (US)
(74) Representative: MÜLLER & HOFFMANN Patentanwälte

(57) **Abstract**

The present invention is directed to a multiple channel fiber optic rotary joint having a stator and a rotor. Each of the rotor and stator has an optical connector having multiple fiber optic channels. A first channel is formed by a central optical fiber. The second and other optical channels are formed by forming concentric rings including individual small fibers. Each of the small fibers is about 0.001 of an inch in diameter. The multiple small fibers are formed into a ring and then a separator layer is formed over the optical ring between adjacent optical channels. A first optical surface is formed on the first optical connector. A second optical surface is formed on the second optical connector. Signals on multiple optical channels can be transmitted between the first and second optical connector when the rotor is rotated. The separator layers are set at a thickness such that there is no cross-talk from one channel to the adjacent channel.

## Description

### Field of the Invention

The present invention relates generally to rotary optical joints, and more particularly, to a multi-channel on-axis fiber optic rotary joint.

### Background of the Invention

Typical fiber optic rotary joints include an optical fiber positioned in a rotor and a second optical fiber positioned in a stator. Signals are transmitted from the rotating rotor to the stationary stator through an optical interface formed between flat optical surfaces on the adjacent first optical fiber and second optical fiber.

Optical rotary joints can also have lenses in front of the fibers to enlarge the beams. The lenses are positioned between the fibers and can be either rod or ball shaped. Disadvantageously, these lenses add more expense to the rotary joint.

A disadvantage of such an arrangement is that only a single optical channel is formed. A need exists in the art for a fiber optical rotary joint which can carry multiple optical channels.

### Summary of the Invention

It is, therefore, an object of the present invention to provide an optical cable which can carry multiple optical channels.

It is another object of the present invention to provide a fiber optic rotary joint which can carry multiple channels.

Another object of the present invention is to provide a method of forming an optical cable which can carry multiple channels.

The present invention is directed to a multiple channel fiber optic rotary joint having a stator and a rotor. Each of the rotor and stator has an optical connector having multiple fiber optic channels. A first channel is formed by a central optical fiber. The second and other optical channels are formed by forming concentric rings including individual small fibers. Each of the small fibers is about 0.001 of an inch in diameter. The multiple small fibers are formed into a ring and then a separator layer is formed over the optical ring between adjacent optical channels. A first optical surface is formed on the first optical connector. A second optical surface is formed on the second optical connector. Signals on multiple optical channels can be transmitted between the first and second optical connector when the rotor is rotated. The separator layers are set at a thickness such that there is no cross-talk from one channel to the adjacent channel.

These and other objects of the present invention are achieved by a multiple channel fiber optic rotary joint which includes a first optical connector including, a center optical fiber, a separator layer surrounding the center optical fiber, a first optical ring the surrounding separator layer, and an optically non-conductive outer layer surrounding the first optical ring. A second optical connector including a center optical fiber, a separator layer surrounding the center optical fiber, and a first optical ring surrounding the separator layer, and an optically non-conductive outer layer surrounding the separator layer.

The foregoing and other objects of the present invention are achieved by a method of forming an optical cable having multiple optical channels, including placing a first separator layer around a central optical fiber. The central optical fiber is for carrying optical signals on a first optical channel. A second optical channel is formed by placing multiple optical fibers around the separator layer to form a first optical ring. An optically non-conductive outer layer is placed around the first optical ring.

The foregoing and other objects of the present invention are achieved by a method of forming a rotary optical joint having multiple optical channels. A first optical connector is formed by placing a first separator layer around a central optical fiber. The central optical fiber is for carrying optical signals on a first optical channel. A second optical channel is formed by placing multiple optical fibers around the separator layer to form a first optical ring. An optically non-conductive outer layer is placed around the first optical ring. A second optical connector is formed by placing a first separator layer around a central optical fiber. The central optical fiber is for carrying optical signals on a first optical channel, forming a second optical channel by placing multiple optical fibers around the separator layer to form a second optical ring. An optically non-conductive outer layer is placed around the second optical ring. Optical surfaces are formed on the first optical connector and the second optical connector. The optical surfaces are positioned adjacent one another. The first optical connector is located in a rotor and the second optical connector is located in a stator.

Still other objects and advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description thereof are to be regarded as illustrative in nature, and not as restrictive.

### Brief Description of the Drawings

The present invention is illustrated by way of example, and not by limitation, in the figures of the accompanying drawings, wherein elements having the same reference numeral designations represent like elements throughout and wherein:
Figure 1 is a cross-sectional view of a multiple channel fiber optical rotary joint according to the present invention;
Figure 2 is a cross-sectional view taken along line 2-2 in Figure 1 of a fiber optical cable or connector according to the present invention;
Figure 3 is another partial cross-sectional view of the optical interface between the first optical connector and the second optical connector;
Figure 4 is a side elevational view of a partially completed optical cable having optical channel A;
Figure 5A is a side elevational cross-sectional view of a mold used in forming optical channel B;
Figure 5B is a front elevational view of a partially completed optical cable having optical channels A and B;
Figure 6 is a partial side elevational view of a partially completed optical cable assembly having optical channels A and B and a separator ring; and
Figure 7 is a side cross-sectional elevational view of a mold for forming optical channel C.

### Best Mode for Carrying Out the Invention

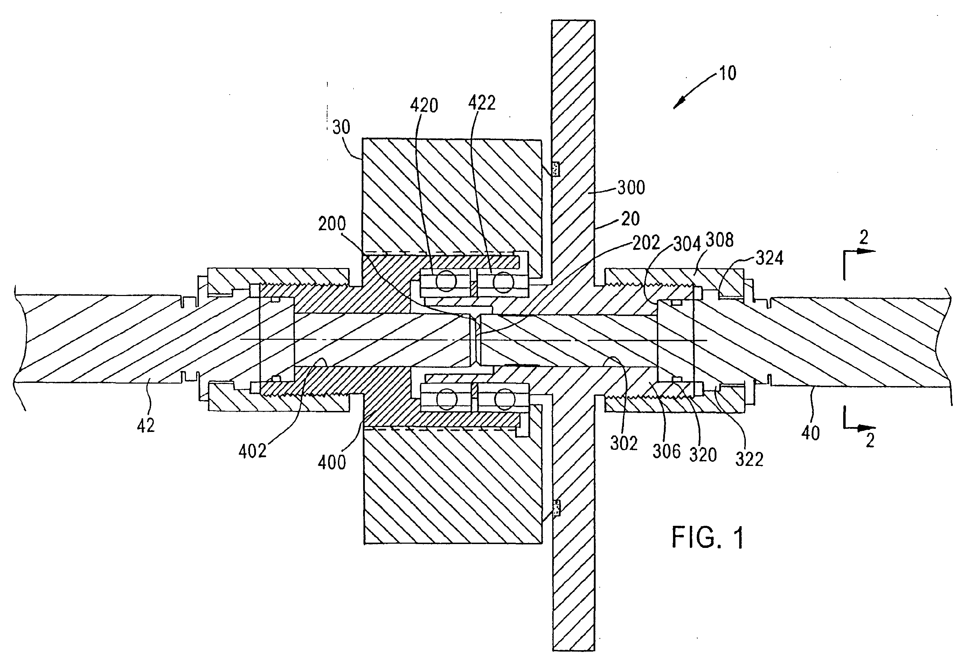

Referring first to Figure 1, a multiple channel fiber optic rotary joint, generally indicated at 10, is illustrated. Although the multiple channel fiber optic rotary joint 10 is depicted in a horizontal orientation in Figure 1, it should be understood that joint 10 is usable in any orientation. The fiber optical rotary joint 10 includes a stator assembly 20 and a rotor assembly 30. A fiber optic connector 40 according to the present invention is housed in the stator assembly 20. A fiber optic connector 42 according to the present invention is housed in the rotor assembly 30. A typical cable usable with the present invention would have two fiber optic connectors (for example, fiber optic connector 40 on one end thereof and a fiber optic connector 42 on the opposite end). Of course, any combination of connectors 40, 42 can be used.

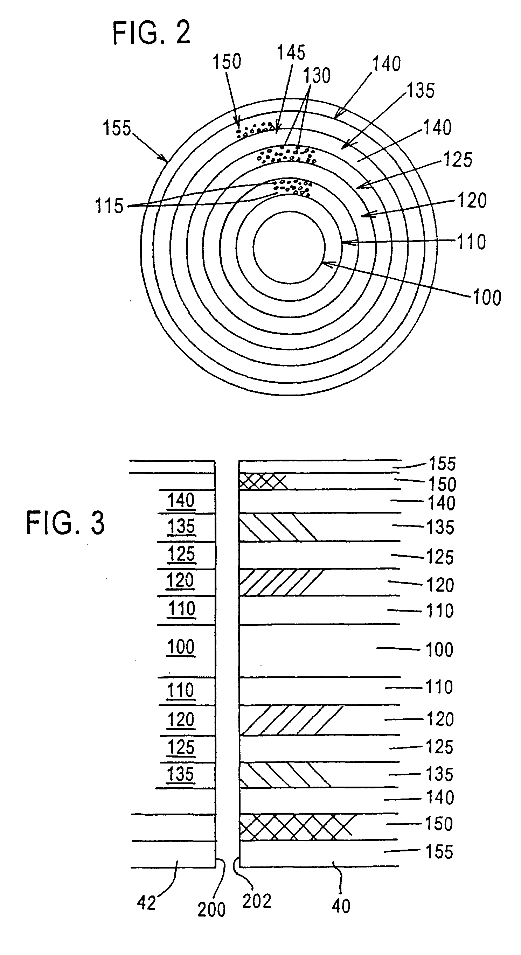

The construction of the fiber optic connectors 40, 42 is described in relation to Figures 2 and 3. Connectors 40, 42 can be identical or can be slightly different depending upon mounting configurations. Either connector 40, 42 can be the transmitter or receiver and because of the separate channel, signals can be transmitted in both directions. Opto-electronics (not shown) are provided to convert the optical signals carried on each of the multiple optical channels into electrical signals in a known manner. The components of the rotor 30 and the stator 40 are conventional and will be described in detail after the inventive fiber optic connectors 40, 42 have been described in detail. The construction of the optical channels and the size thereof for connectors 40, 42 will be identical for any particular rotary joint 10 as explained in detail below. For example, the inner and outer diameters of each of the optical channels in each connector 40, 42 will be identical and in alignment to prevent cross-talk and back reflection.

Referring now to Figure 2, a cross-sectional view of an exemplary fiber optic connector 40, 42 is depicted. As depicted in Figure 2, a center fiber 100 is centrally located. This center fiber 100 forms optical channel A. The center fiber 100 is 125 microns (.0049 in.) in diameter or 240 microns (.0095 in.) in diameter and is made of glass or plastic fiber which could also be used. Surrounding the center fiber 100 is a separator ring 110 formed of an optically non-conductive material such as aluminum, glass filled epoxy or steel. The separator ring must be sufficiently thick to prevent cross-talk and back reflection between adjacent channels.

Surrounding the separator ring 110 is a first optical ring formed of .001 inch diameter optical fibers 115 made from preferably glass. The fibers 115 are placed around the separator ring in a mold to form a first optical ring 120 forming optical channel B. When enough optical fibers have been placed around the separator ring 110 another separator ring is placed around the first optical ring 120. Fibers could also be plastic and are bonded together by the epoxy. Additional channels are similarly formed. For example, as depicted in Figure 2, a third optical channel is formed of a second optical ring 140. A separator ring 145 surrounds the second optical ring 140. A fourth optical channel is formed of a third optical ring 150. A metal sleeve 155 surrounds the third optical ring. Each of the rings and separator layers can be co-extensive. Similarly, a second optical ring 135 is formed of a plurality of optical fibers 130. After the second optical ring 135 has been formed, another separator layer 140 is placed around the second optical ring 135. Additional optical rings can be formed as necessary. The metal sleeve 155 is placed around the optical ring 150. The number of channels formed can be varied depending on the application. Although four optical channels are depicted in Figure 2, any number of optical channels can be formed according to the present invention.

As depicted in Figure 3, the optical connectors 40, 42 are shown, in an exploded cross-sectional view taken from Figure 1. As depicted in Figure 3, the connector 42 has an optical face 200 spaced a distance between 0.001 and 0.003 inches from an optical face 202 of the connector 40. Each connector 40, 42 has the same configuration for the optical rings and separator rings so that the optical rings are in alignment with each other. The optical faces are polished flat in an aluminum oxide slurry. This procedure is typical for all optical connectors throughout the optical industry. The alignment is maintained with the mold from 0.0005. Axial alignment is maintained to 0.0005 inches.

Returning to Figure 1, an otherwise conventional stator 20 and rotor 30 is depicted. The stator 20 includes a flange member 300 having an inner bore 302 into which the connector 40 is positioned. The inner bore includes a shoulder 304 against which a portion of the optical connector 40 abuts. A rear portion of the flange member 300 has a threaded portion 306 for engaging with a threaded nut 308. The connector 40 has a front shoulder 320 for engaging with shoulder 304 of flange 300 and the connector 40 has a rear shoulder 322 for engaging with a shoulder 324 in the threaded nut 308. Thus, the connector 40 is retained between flange 300 and the nut 308. The shoulders on the connectors are machined on a lathe. The entire connector can be machined from steel, aluminum, brass, etc.

The rotor assembly 30 includes a rotor body 400 having a through bore 402. The rotor body 400 has a cavity for receiving a pair of bearings 420, 422 which have an outer diameter in contact with an inner diameter of rotor body 400 and an inner diameter in contact with a portion of flange 300. Thus, the rotor 30 can rotate relative to the stator 20. The optical surfaces 200 and 202 are not in contact A gap of .001-.003 inches exists between the surfaces. The flanges 322 and 324 are machined.

As depicted in Figure 3, each of the rings and layers is aligned between connector 40 and 42. For example, center fiber 100 is aligned between connectors 40 and 42. Also, for example, separator ring 125 is aligned between connectors 40 and 42. Each optical ring provides a signal to an individual connector which may go to a transmitter or receiver.

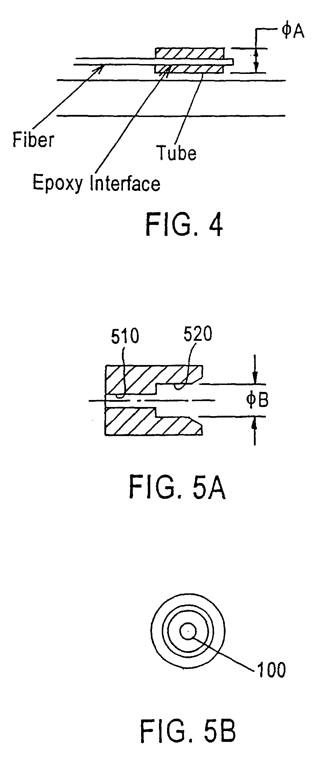

As depicted in Figure 4, the fiber 100 is installed in the optically non-conductive tube or separator ring 110. The fiber 100 is in place inside the tube 110. The epoxied fiber 100 and ring 110 are then placed into a mold 500 depicted in Figure 5A. The mold 500 has a through bore 510 having a diameter φB.

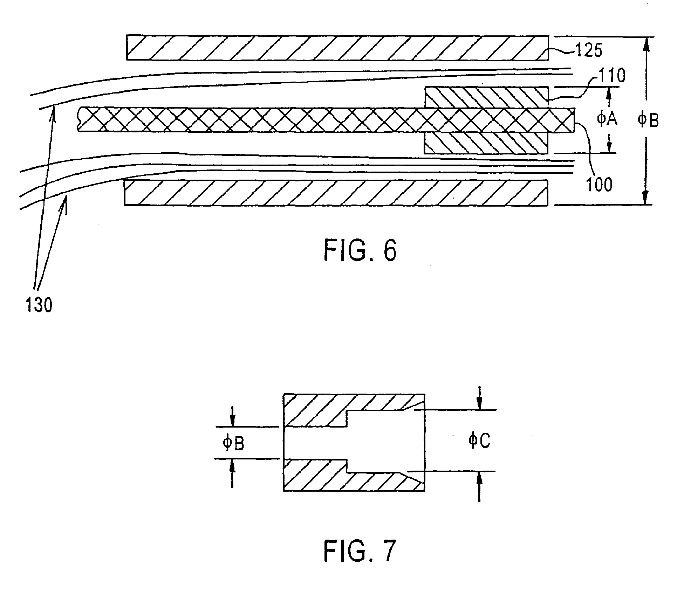

The second non-conductive tube or separator ring 125 is installed concentric to fiber 100 with a calculated number of 0.001 inch diameter fibers 130 installed in the tube 125 as depicted in Figure 6. This assembly is then installed in the mold 500. This mold configuration 500 allows the channels (A and B) to be concentric to eliminate optical cross-talk and optical signal variation as the joints rotates through 360°. For channel C, etc., the mold grows in diameter. φA becomes φB and φC is the diameter of the non-conductive tube for channels as depicted in Figure 7.

In operation, the optical faces 200, 202 are in optical contact with one another. Optical signals are transmitted through each of the optical channels. For example, and optical signal is transmitted on a first channel through center fiber 100. A second optical signal is transmitted through the first optical ring 120. A third optical signal is transmitted through the second optical ring 135. A fourth optical signal can be transmitted through optical rings 150. During operation, connector 42 is rotated relative to connector 40. Because of the close alignment between the rings, sleeves and fibers, and the separator rings, there is no cross-talk or back reflection and multiple optical signals are carried on each of the optical channels. Each of the optical rings or fiber carries a separate optical channel.

It should now be apparent that an optical cable has been described having separate multiple optical channels. It should also be apparent that an optical connector has been described having separate multiple channels. Also a method of forming an optical connector and an optical cable has been described having separate optical channels. Also, a multiple channel on-axis fiber optic rotary joint has been described using the inventive optical connector and/or optical cable of the present invention.

It will be readily seen by one of ordinary skill in the art that the present invention fulfills all of the objects set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. A multiple channel fiber optic rotary joint, comprising:
a first optical connector comprising:
a center optical fiber;
a separator layer surrounding said center optical fiber;
a first optical ring surrounding said separator layer, and
an optically non-conductive outer layer surrounding said first optical ring; and
a second optical connector comprising:
a center optical fiber;
a separator layer surrounding said center optical fiber; and
a first optical ring surrounding said separator layer, and
an optically non-conductive outer layer surrounding said separator layer.

2. The multiple channel fiber optic rotary joint of claim 1, wherein said first optical connector is positioned in a stator and said second optical connector is positioned in a rotor.

3. The multiple channel fiber optic rotary joint of claim 1, wherein said first optical connector has an optical face formed by said center optical fiber, said separator layer, said first optical ring and said optically non-conductive outer layer and said second optical connector has an optical face formed by said center optical fiber, said separator layer, said first optical ring and said optically non-conductive outer layer wherein said center optical fibers, said separator layers and said first optical rings are aligned with each other.

4. The multiple channel fiber optic rotary joint of claim 1, wherein said optical faces are separated by a gap between 0.001 to 0.003 inches.

5. The multiple channel fiber optic rotary joint of claim 1, wherein said first optical rings are made from multiple fibers.

6. The multiple channel fiber optic rotary joint of claim 4, wherein each of said multiple fibers has a diameter of approximately 0.001 inch.

7. The multiple channel fiber optic rotary joint of claim 4, wherein said multiple fibers are made of glass.

8. The multiple channel fiber optic rotary joint of claim 1, wherein separator layers are optically non-conductive.

9. The multiple channel fiber optic rotary joint of claim 1, wherein said fiber, said separator layer and said first optical ring are concentric.

10. The multiple channel fiber optic rotary joint of claim 1, wherein the separator layers are of sufficient thickness to prevent cross-talk between adjacent channels.

11. A method of forming an optical cable having multiple optical channels, comprising:
placing a first separator layer around a central optical fiber, the central optical fiber for carrying optical signals on a first optical channel;
forming a second optical channel by placing multiple optical fibers around the separator layer to form a first optical ring; and
placing an optically non-conductive outer layer around the first optical ring.

12. The method of claim 11, further comprising placing a second separator layer around the first optical ring.

13. The method of claim 12, further comprising forming a third optical channel by placing multiple optical fibers around the second separator layer.

14. The method of claim 11, wherein said optical fiber, said separator layer and said first optical ring are concentric.

15. A method of forming a rotary optical joint having multiple optical channels, comprising:
forming a first optical connector by:
placing a first separator layer around a central optical fiber, the central optical fiber for carrying optical signals on a first optical channel;
forming a second optical channel by placing multiple optical fibers around the separator layer to form a first optical ring;
placing an optically non-conductive outer layer around the first optical ring; and
forming a second optical connector by:
placing a first separator layer around a central optical fiber, the central optical fiber for carrying optical signals on a first optical channel;
forming a second optical channel by placing multiple optical fibers around the separator layer to form a second optical ring;
placing an optically non-conductive outer layer around the second optical ring; and
forming optical surfaces on the first optical connector and the second optical connector and positioning the optical surfaces adjacent one another;
wherein the first optical connector is located in a rotor and the second optical connector is located in a stator.

16. The method of claim 15, further comprising placing a second separator layer around the first optical ring.

17. The method of claim 15, further comprising forming a third optical channel by placing multiple optical fibers around the second separator layer.

18. The method of claim 15, wherein said optical fiber, said separator layer and said first optical ring are concentric.
